Europäisches Patentamt

European Patent Office

Office européen des brevets

(11) Publication number: **0 484 163 B1**

# EUROPEAN PATENT SPECIFICATION

(45) Date of publication of patent specification: **03.05.95**  (51) Int. Cl.⁶: **C09K 19/00**, G02F 1/1333

(21) Application number: **91310091.3**

(22) Date of filing: **31.10.91**

(54) **Liquid crystal display device.**

(30) Priority: **31.10.90 JP 296263/90**

(43) Date of publication of application:
**06.05.92 Bulletin 92/19**

(45) Publication of the grant of the patent:
**03.05.95 Bulletin 95/18**

(84) Designated Contracting States:
**CH DE FR GB IT LI NL**

(56) References cited:
**EP-A- 0 272 585**
**EP-A- 0 304 153**
**EP-A- 0 362 776**
**US-A- 4 101 207**

(73) Proprietor: **SHARP KABUSHIKI KAISHA**
**22-22 Nagaike-cho**
**Abeno-ku**
**Osaka 545 (JP)**

(72) Inventor: **Hirai, Toshiyuki**
**Rapolu No. 772,**
**2613-1, Ichinomoto-cho**
**Tenri-shi,**
**Nara-ken (JP)**
Inventor: **Kozaki, Shuichi**
**51-303, 2-1-2, Ukyo**
**Nara-shi,**
**Nara-ken (JP)**
Inventor: **Funada, Fumiaki**
**33-10, Izumihara-cho**
**Yamatokoriyama-shi,**
**Nara-ken (JP)**

(74) Representative: **Brown, Kenneth Richard et al**
**R.G.C. Jenkins & Co.**
**26 Caxton Street**
**London SW1H 0RJ (GB)**

## Description

The present invention relates to a liquid crystal display device.

Conventionally, liquid crystal display devices of the twisted nematic (TN) type and the supertwisted nematic (STN) type have been practically used as display devices utilizing electrooptic effects. As well, display devices using a ferroelectric liquid crystal has also been proposed. The liquid crystal display devices as noted above need a polarizer as well as an orientation treatment.

On the other hand, there have been proposed liquid crystal display devices which do not need a polarizer and which utilize liquid crystal scattering effects such as dynamic scattering (DS) effect and phase change (PC) effect. For instance, there has recently been proposed a display device in which liquid crystal molecules are dispersed in a polymer material to obtain the liquid crystal scattering effects. Such a device does not need a polarizer nor orientation treatment.

For example, Japanese Announced Patent Publication No. 501631/1983 has proposed a liquid crystal display device which is fabricated by: suspending a nematic liquid crystal material of positive dielectric anisotropy in an aqueous solution of polyvinyl alcohol to form an emulsion; applying the emulsion to a substrate having transparent electrodes; evaporating water off from the applied emulsion to form a film having the liquid crystal material dispersed in the PVA; and bonding another substrate having transparent electrodes to the former substrate to complete a display device.

Further, Japanese Announced Patent Publication No. 502128/1986 has proposed a liquid crystal display device which is fabricated by: mixing and dispersing a liquid crystal material of positive dielectric anisotropy together with a curing agent in an epoxy resin; sandwiching the mixture by means of a pair of opposed substrates having transparent electrodes; and heating to cure the epoxy resin to complete a display device.

In addition there have been proposals of using a well-known polymer of the acryl- or urethane type other than the abovementioned polymers as a dispersion medium in a liquid crystal display device.

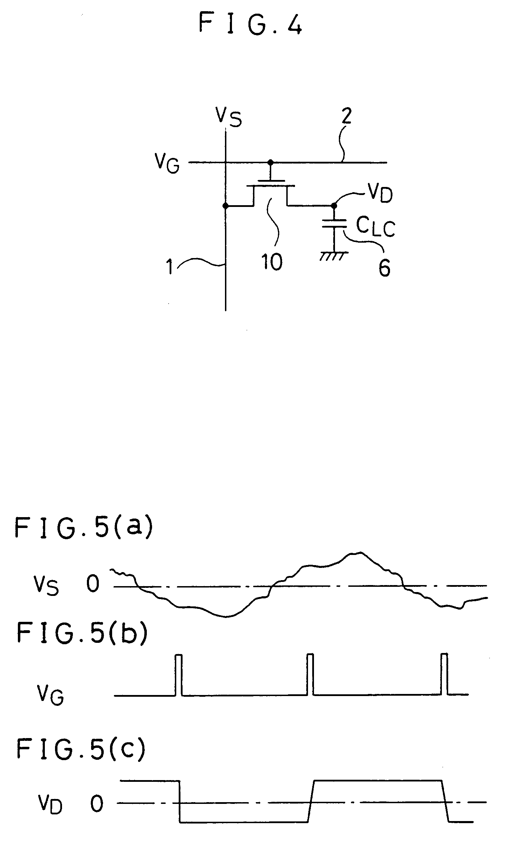

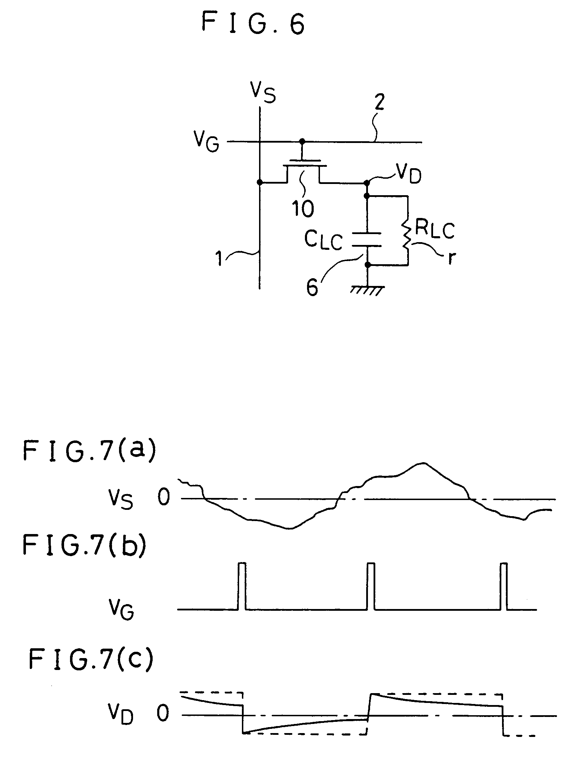

The liquid crystal device in which a liquid crystal material of positive dielectric anisotropy is dispersed in a typical transparent polymer such as of polyvinyl alcohol type, epoxy type, acryl type or urethane type cannot be static-driven and hence cannot be represented by an ideal equivalent circuit (FIG. 4) exhibiting good display properties such as clear contrast. This is because in such a device a large resistance element $r$ (equivalent to a resistance $R_{LC}$) originated from conductive impurities introduced from exterior or produced by decomposition of a liquid crystal compound is present in a liquid crystal layer 6 acting as a capacitor $C_{LC}$, as shown in FIG. 6. For this reason the liquid crystal layer electrically charged by a voltage $V_D$ gradually discharges with time, and hence a voltage of effective value applied to the liquid crystal layer 6 lowers. The liquid crystals exhibit cumulative response effect in response to an applied voltage, and depends therefore upon the voltage of effective value applied thereto, resulting in poorer display contrast with lower voltage of effective value. So, the extent of decrease in voltage of effective value is evaluated using a parameter which is defined herein as a voltage holding ratio. The voltage holding ratio is defined as a ratio of the actual effective value of the voltage $V_D$ to the effective value of the voltage $V_D$ in the case the resistance in the liquid crystal layer is assumed to be infinitely great.

As can be understood from Table 1, the liquid crystal display devices using the above conventional transparent polymers have a problem of low voltage holding ratio, leading to poor contrast. In addition the voltage holding ratios (at 25°C) shown in Table 1 were those of the devices having been just fabricated, and which rates were proved to decrease with time.

Table 1

| | Polyvinyl alcohol-type polymer | Epoxy-type polymer | Acryl-type polymer | Urethane-type polymer |
|---|---|---|---|---|
| Voltage holding ratio (%) | 60 | 35 | 73 | 70 |

The document EP-A-0272585 discloses a liquid crystal device in which the liquid crystal layer may contain a fluoroalkyl acrylate.

The present invention is intended to overcome the foregoing problems, and an aim thereof is to provide a liquid crystal display device having a high voltage holding ratio which assures a superior display contrast.

According to one aspect of the present invention there is provided a liquid crystal display device comprising:

a plurality of pixels, and a plurality of pixel electrodes arranged in a matrix pattern, a respective switching element for connecting each pixel electrode to one of a plurality of signal electrodes for supplying

2

a data signal to that pixel electrode in accordance with a scanning signal supplied by one of a plurality of scanning electrodes, a counter electrode and a liquid crystal layer containing a liquid crystal material dispersed in or impregnated with a fluoro-type polymer and disposed between the pixel electrodes and the counter electrode characterised in that the fluoro-type polymer comprises one of polyperfluorooctyl methacrylate, polyperfluorooctylethyl acrylate, polytrifluoroethyl acrylate, poly-2,2,3,3-tetrafluoropropyl acrylate, polyperfluorooctyl acrylate, perfluorooctylethyl acrylate-2-ethylhexyl acrylate copolymer, trifluoroethyl acrylate-2-ethylhexyl acrylate copolymer, 2,2,3,3-tetrafluoropropyl acrylate-2-ethylhexyl acrylate copolymer, perfluorooctyl acrylate-2-ethylhexyl acrylate copolymer, or any combination thereof.

The device may further comprise a first substrate having said signal electrodes and said scanning electrodes insulated from each other through an insulating layer, the first substrate being further provided with said switching elements, each comprising a switching transistor, and said pixel electrodes both in association with intersections of said signal electrodes and said scanning electrode;

a second substrate having said counter electrode to be placed at least opposite to said pixel electrodes;

said first and second substrates being opposed to each other so as to sandwich the liquid crystal layer;

the liquid crystal material having a positive dielectric anisotropy.

The fluoro-type polymer can cause the liquid crystal layer to augment the voltage holding ratio and reduces the amount of electricity discharged therefrom, leading to a reliable liquid crystal display device with good display properties.

According to another aspect of the present invention there is provided a method of forming a liquid crystal display device having a plurality of pixels, and a plurality of pixel electrodes arranged in a matrix pattern, a switching element for connecting each pixel electrode to one of a plurality of signal electrodes for supplying a data signal, in accordance with a scanning signal supplied by one of a plurality of scanning electrodes, a counter electrode and a liquid crystal layer containing a liquid crystal material disposed between the pixel electrodes and the counter electrode and comprising the steps of:

forming the plurality of scanning, signal and pixel electrodes, and switching elements on a first substrate;

forming the counter electrodes on a second substrate; and

sandwiching the liquid crystal layer between the first and second substrates, characterised by dispersing the liquid crystal material in or impregnating the liquid crystal material with a transparent fluoro-type polymer comprising one of polyperfluorooctyl methacrylate, polyperfluorooctylethyl acrylate, polytrifluoroethyl acrylate, poly-2,2,3,3-tetrafluoropropyl acrylate, polyperfluorooctyl acrylate, perfluorooctyl acrylate, perfluorooctylethyl acrylate-2-ethylhexyl acrylate copolymer, trifluoroethyl acrylate-2-ethylhexyl acrylate copolymer, 2,2,3,3-tetrafluoropropyl acrylate-2-ethylhexyl acrylate copolymer, perfluorooctyl acrylate-2-ethylhexyl acrylate copolymer, perfluorooctyl acrylate-2-ethylhexyl acrylate copolymer, tetrafluoroethylene-perfluoropropoxyethylene copolymer or any combination thereof.

Specific embodiments of the present invention will now be described with reference to the accompanying drawings, in which:-

FIGs. 1(a) and 1(b) are views for schematically illustrating a matrix-type liquid crystal display device fabricated in the embodiment of the invention;

FIG. 2 is a view for schematically illustrating a projection apparatus using the matrix-type liquid crystal display device shown in FIGs. 1(a) and 1(b);

FIG. 3 is a view for schematically illustrating a system for measuring a voltage holding ratio of liquid crystal;

FIG. 4 is a diagram of an ideal equivalent circuit for one pixel;

FIG. 5 is a diagram of driving voltage wave form with respect to the ideal equivalent circuit shown in FIG. 4;

FIG. 6 is a diagram of an actual equivalent circuit for one pixel; and

FIG. 7 is a diagram of a driving voltage waveform with respect to the actual equivalent circuit shown in FIG. 6.

In the present invention the liquid crystal layer has a predetermined amount of the liquid crystal material of positive dielectric anisotropy dispersed in the transparent fluoro-type polymer.

The above fluoro-type polymer is preferably hard to polarize and to generate ions while being chemically inert and superior in dielectric properties. As the fluoro-type polymer, may be used a homopolymer of a fluorine-containing vinyl monomer or a copolymer thereof. Specific examples of such a fluoro-type polymer include polyperfluorooctyl methacrylate, polyperfluorooctylethyl acrylate, polytrifluoroethyl acrylate, poly-2,2,3,3-tetrafluoropropyl acrylate, polyperfluorooctyl acrylate, perfluorooctylethyl acrylate-2-ethylhexyl acrylate copolymer, trifluoroethyl acrylate-2-ethylhexyl acrylate copolymer, 2,2,3,3-tetrafluoropropyl acrylate-2-ethylhexyl acrylte copolymer, perfluorooctyl acrylate-2-ethylhexyl acrylate copolymer and the like.

As the above liquid crystal material of positive dielectric anisotropy, may be used a known liquid crystal material such as ZLI-3219, ZLI-4718, ZLI-4749, ZLI-4792, ZLI-4801-000 and ZLI-4801-001 (products of MERCK & CO., Inc.), E7 or E8 (product of BDH CO.), GR-63 (product of CHISSO CORPORATION) or the like. Such a liquid crystal material is used in an amount of 100-1900 weight parts relative to 100 weight parts of the transparent fluoro-type polymer, preferably 150-900 weight parts relative thereto.

Dispersing the liquid crystal material in the transparent fluoro-type polymer can be conducted, for example, in accordance with the following methods.

1. Filling a homogeneous mixture solution of the liquid crystal material and a polymerizable fluoro-type composition between the first and second substrates, then polymerizing and curing the polymerizable fluoro-type composition thereby dispersing the liquid crystal material in the transparent fluoro-type polymer. As the polymerizable fluoro-type composition, may be used perfluorooctylethyl acrylate or a like composition. The first and second substrates can be fabricated in accordance with a known method.

2. Forming previously a porous material composed of the transparent fluoro-type polymer between the first and second substrates, then impregnating the liquid crystal material in the porous material. Formation of the porous material can be carried out in accordance with a known method.

3. Mixing the fluoro-type polymer, the liquid crystal material and a solvent to form a solution, applying the solution to the first and/or second substrate, and then evaporating the solvent off thereby dispersing the liquid crystal material in the fluoro-type polymer.

Hereinafter, examples of the invention will be detailed with reference to the drawings. It should be understood that the examples are not limitative of the invention.

〈Example 1〉

Preparation of a solution for liquid crystal layer to be applied to substrate

A copolymer (40 weight parts), a liquid crystal material of positive dielectric anisotropy (ZLI-3219: product of MERCK, 60 weight parts) and tetrahydrofuran (150 weight parts) as solvent were mixed and taken into a homogenized solution to form the captioned solution for liquid crystal layer to be applied to substrate.

Formation of a liquid crystal layer

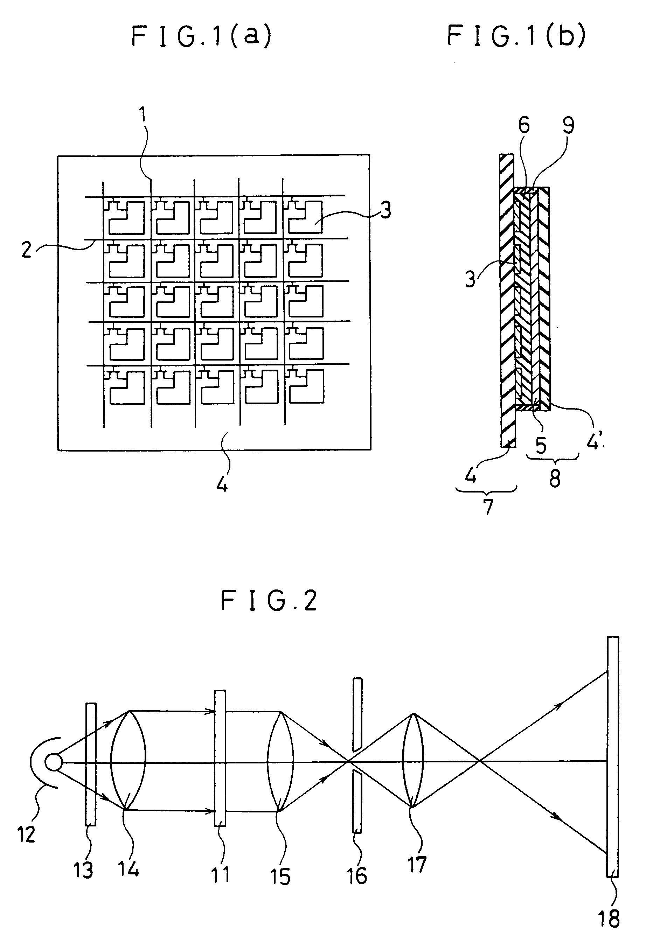

As shown in FIGs. 1(a) and 1(b), a transparent insulating substrate 4 made of a glass free of birefringence was formed, in a matrix array, with bus lines such as a signal electrode 1 and a scanning electrode 2, together with a pixel electrode 3 made of ITO and a switching transistor 10 associated with the pixel electrode 3 to constitute a display electrode substrate 7 (first electrode) for active matrix driving. As the above switching transistor 10 used was an a-Si thin film transistor (TFT).

In turn, the abovementioned solution for liquid crystal layer was applied to the first substrate and heated to be dried to form a liquid crystal layer having the liquid crystal material of positive dielectric anisotropy dispersed in the polymer.

Completion of a liquid crystal display device

As shown in FIGs. 1(a) and 1(b), on the first substrate formed with the above liquid crystal layer, mounted was a second substrate having a counter electrode 5 made of ITO on a transparent insulating substrate 4' of glass of the same nature as the above. Thereafter, the liquid crystal layer was sealed with a sealant 9 made of an epoxy resin to complete a liquid crystal display device.

Operation of the liquid crystal display device

When attention is directed to one pixel, its equivalent circuit and driving voltage waveforms are respectively shown in FIGs. 4 and 5(a)-(c), wherein when a scanning signal voltage $V_G$, applied to the scanning electrode 2, causes the transistor 10 to be turned ON, the liquid crystal layer 6 (which equivalently corresponds to a capacitor $C_{LC}$) is electrically charged by a signal voltage $V_S$, and the charge is maintained there until the transistor is turned ON again. As a result, the liquid crystal layer 6 is applied with a voltage $V_D$ and thus good display properties can be obtained as in the case of static driving.

Measurement of voltage holding ratio

The aforesaid solution for liquid crystal layer was applied onto a transparent glass substrate having transparent electrodes of ITO and dried by heating to form a liquid crystal layer containing a liquid crystal material dispersed in the copolymer. On the substrate thus formed with the liquid crystal layer, another transparent glass substrate with transparent electrodes of ITO was mounted, and the liquid crystal layer was sealed with a sealant of an epoxy resin to complete a liquid crystal cell for evaluation.

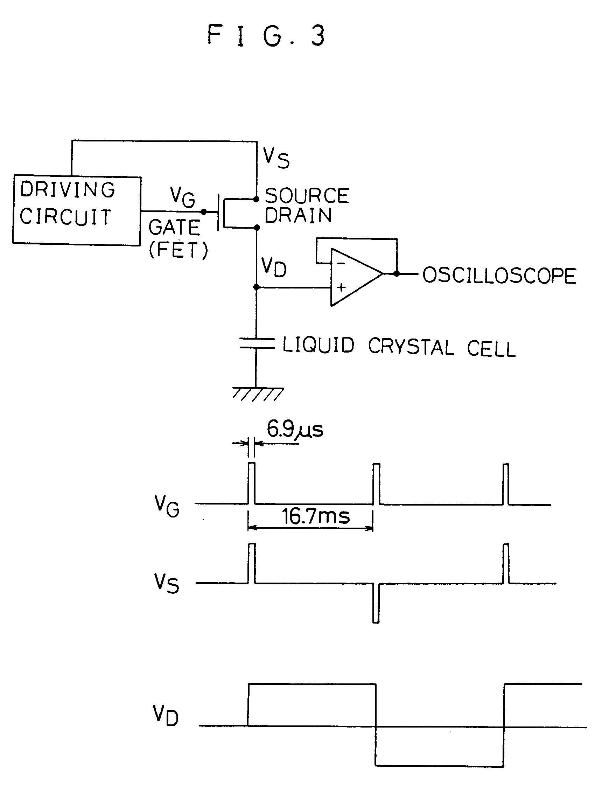

The voltage holding ratio of the above liquid crystal cell was measured using a holding ratio measuring system shown in FIG. 3. This system comprised a switching transistor (FET) and driving circuit for applying voltage across the electrodes and a circuit for measuring the amount of electric charge discharged from the liquid crystal layer.

〈Comparative Example 1〉

A liquid crystal display device was fabricated in the same manner as in Example 1 except that a solution for liquid crystal layer to be applied to the substrate was prepared by completely dissolving 8 weight parts of polyvinyl alcohol in 80 weight parts of distilled water, adding to the solution 12 weight parts of the liquid crystal material ZLI-3219, and mixing and stirring the mixture with a blender mill to give a milky white dispersion of liquid crystal in an aqueous solution of polyvinyl alcohol.

The liquid crystal display device thus fabricated exhibited 60 % voltage holding ratio.

Likewise, holding ratio of liquid crystal display devices using an epoxy-type polymer, acryl-type polymer and an urethane-type polymer were measured. The result of the measurement was same as shown in the above Table 1.

〈Example 2〉

FIG. 2 illustrates an arrangement of a projection apparatus using the liquid crystal display device fabricated in Example 1, wherein light from a projection light source 12 goes through a heat ray cutting filter 13, is made parallel by a condenser lens 14, transmits the liquid crystal display device 11, condenses by at a lens 15, goes through a diaphragm 16, and is projected onto a screen 18 by a projection lens 17, creating an image thereon.

Such a projection apparatus using the liquid crystal display device provided with a switching transistor exhibited high contrast (50 : 1, or more), offering a high display quality. Further, an aging test by powering on at 50 °C for 500 hours revealed that the projection apparatus maintained its high display quality free from display irregularities. The above results were true of a projection apparatus using a liquid crystal display device having a switching transistor wherein a spongy porous material of a fluoro-type polymer was impregnated with the liquid crystal material.

In contrast, the case of using the liquid crystal display device of Comparative Example 1 wherein polyvinyl alcohol was used as a dispersion medium offered unsatisfactory display quality. What was even worse, the aging test by powering on revealed a decrease in contrast and occurrence of display irregularities.

〈Example 3〉

A solution for liquid crystal layer was prepared by homogeneously mixing perfluorooctylethyl acrylate as a fluoro-containing vinyl monomer (24 weight parts), 2-ethylhexyl acrylate (6 weight parts), a liquid crystal material of positive dielectric anisotropy (ZLI-3219 of MERCK, 70 weight parts) and a photopolymerization initiator (DAROCURE 1173 of MERCK, 1 weight part).

A pair of transparent glass substrates having transparent electrodes of ITO were disposed opposite via 10 µm-spacers so that the electrodes of one substrate may face to those of the other substrate. The substrates were fixed to each other with a sealant of epoxy resin, and the space between the two substrates was filled with the above solution for liquid crystal layer. The substrates were then irradiated with UV ray to cure the solution, completing a liquid crystal cell for evaluation.

The liquid crystal cell for evaluation was subjected to the holding ratio measuring system as shown in FIG. 3 to measure the voltage holding ratio thereof. As a result, such a cell for evaluation exhibited 95.4 % voltage holding ratio at 25 °C.

As well, voltage holding ratios were measured with respect to liquid crystal cells respectively using trifluoroethyl acrylate, 2,2,3,3-tetrafluoropropyl acrylate and perfluorooctyl acrylate as a fluoro-containing vinyl monomer instead of using the above perfluorooctylethyl acrylate. These cells also exhibited high voltage holding ratios as shown in Table 3.

## Table 3

| Fluoro-containing vinyl monomer | Voltage holding ratio (%) at 25 °C |
|---|---|
| Trifluoroethyl acrylate | 94.3 |
| 2,2,3,3-Tetrafluoropropyl acrylate | 94.7 |
| Perfluorooctyl acrylate | 95.5 |

In turn, as shown in FIGs. 1(a) and 1(b), the first substrate 7 and the second substrate 8 of Example 1 are bonded together via 10 $\mu$m-spacers with the sealant 6 of epoxy resin, with providing an injection inlet so that the pixel electrode of the first substrate and the counter electrode of the second substrate can face to each other. Subsequently, the solution for liquid crystal layer obtained in this Example was injected between the substrates by low pressure injection method, then irradiated with UV ray of about 30 mW/cm$^2$ for 60 sec. to cure the solution, completing a liquid crystal display device with a liquid crystal material dispersed in a fluoro-type polymer.

The liquid crystal display device thus obtained was applied to the projection apparatus as in Example 2. Such an apparatus exhibited high contrast and high display quality. Even after having been subjected to the aging test with powering on for 500 hours at 50 °C, the apparatus maintained its high contrast property and display quality without causing display irregularities.

⟨Example 4⟩

A solution for liquid crystal layer was prepared by homogeneously mixing perfluorooctylethyl acrylate as a fluoro-containing vinyl monomer (24 weight parts), 2-ethylhexyl acrylate (6 weight parts), a fluoro-type liquid crystal material of positive dielectric anisotropy (ZLI-4792 of MERCK, 70 weight parts) and a photopolymerization initiator (DAROCURE 1173 of MERCK, 1 weight part).

The solution was injected into the cell fabricated in Example 3 and cured by irradiating UV rays, completing a liquid crystal cell for evaluation. This cell exhibited 98.8 % voltage holding ratio at 25 °C.

As well, voltage holding ratios were measured with respect to cells for evaluation respectively using ZLI-4718, ZLI-4749, ZLI-4801-000 and ZLI-4801-001 (products of MERCK) as a fluoro-type liquid crystal material instead of using the above ZLI-4792. These cells also exhibited high voltage holding ratios as shown in Table 4.

6

## Table 4

| Fluoro-type liquid crystal material | Voltage holding ratio (%) at 25 °C |
|---|---|
| ZLI-4718 | 98.0 |
| ZLI-4749 | 98.3 |
| ZLI-4801-000 | 98.8 |
| ZLI-4801-001 | 98.7 |

In the same manner as in Example 3, a liquid crystal display device was fabricated by injecting the above solution for liquid crystal layer and curing it by means of irradiation of UV rays of about 30 mW/cm$^2$ for 60 sec. to disperse the liquid crystal material in a fluoro-type polymer.

The liquid crystal display device thus obtained was applied to the projection apparatus as in Example 2. Such an apparatus exhibited high contrast and high display quality. Even after having been subjected to the aging test with powering on for 500 hours at 50 °C, the apparatus maintained its high contrast property and display quality without causing display irregularities.

As has been described above, the liquid display device of the present invention in which used are a switching transistor such as a-SiTFT and p-SiTFT and a liquid crystal layer composed of a stable and chemically inert fluoro-type polymer and a liquid crystal material of positive dielectric anisotropy dispersed therein can assure a high voltage holding ratio, offering a high display quality and reliability.

The invention being thus described, it will be obvious that the same may be varied in many ways. Such variations are not to be regarded as a departure from the scope of the invention.

## Claims

1. A liquid crystal display device comprising a plurality of pixels, and a plurality of pixel electrodes (3) arranged in a matrix pattern, a respective switching element (10) for connecting each pixel electrode to one of a plurality of signal electrodes (1) for supplying a data signal to that pixel electrode in accordance with a scanning signal supplied by one of a plurality of scanning electrodes (2), a counter electrode (5) and a liquid crystal layer (6) containing a liquid crystal material dispersed in or impregnated with a fluoro-type polymer and disposed between the pixel electrodes and the counter electrode characterised in that the fluoro-type polymer comprises one of polyperfluorooctyl methacrylate, polyperfluorooctylethyl acrylate, polytrifluoroethyl acrylate, poly-2,2,3,3-tetrafluoropropylacrylate, polyperfluorooctylacrylate, perfluorooctylethyl acrylate-2-ethylhexyl acrylate copolymer, trifluoroethylacrylate-2-ethylhexyl acrylate copolymer, 2,2,3,3-tetrafluoropropyl acrylate-2-ethylhexyl acrylate copolymer, perfluorooctyl acrylate-2-ethylhexyl acrylate copolymer, or any combination thereof.

2. A liquid crystal display device according to claim 1 wherein the fluoro-type polymer comprises one of polyperfluorooctyl methacrylate, polyperfluorooctylethyl acrylate, polytrifluoroethyl acrylate, poly-2,2,3,3-tetrafluoropropylacrylate, polyperfluorooctylacrylate, or any combination thereof.

3. A liquid crystal display device according to claim 2 wherein the fluoro-type polymer is a homopolymer.

4. A liquid crystal display device as claimed in claim 1 or 2 wherein said fluoro-type polymer is a homopolymer of a fluorine-containing vinyl monomer or a copolymer thereof.

5. A liquid crystal display device as claimed in any preceding claim, further comprising:
   a first substrate (4) having said signal electrodes (1) and said scanning electrodes (2) insulated from each other through an insulating layer, said first substrate being further provided with said switching elements, each comprising a switching transistor (10), and said pixel electrodes (3) both in association with intersections of said signal electrodes and said scanning electrodes; and

a second substrate (4') having said counter electrode (5) to be placed at least opposite to said pixel electrodes,

said first and second substrates being opposed to each other so as to sandwich said liquid crystal layer (6), said liquid crystal material being of a positive dielectric anisotropy and said fluoro-type polymer being transparent.

6.  A liquid crystal display device as claimed in claim 5, wherein said liquid crystal layer (6) contains 150-900 parts by weight of said liquid crystal material dispersed or impregnated in 100 parts by weight of said transparent fluoro-type polymer.

7.  A liquid crystal display device as claimed in claim 5 or 6, wherein said liquid crystal layer (6) is formed by filling a homogeneous mixture solution of said liquid crystal material and a polymerizable fluoro-type composition in the space between said first and second substrates (7,8), and then polymerizing and curing said polymerizable fluoro-type composition thereby dispersing said liquid crystal material in said transparent fluoro-type polymer.

8.  A liquid crystal device as claimed in claim 5 or 6, wherein said liquid crystal layer (6) is formed by forming previously a porous material composed of said transparent fluoro-type polymer between said first and second substrates (7,8), and then impregnating said liquid crystal material in said porous material.

9.  A liquid crystal display device as claimed in claim 5 or 6, wherein said liquid crystal layer (6) is formed by mixing said fluoro-type polymer, said liquid crystal material and a solvent to form a solution, applying said solution to said first and/or second substrates, and then evaporating said solvent off thereby dispersing said liquid crystal material in said fluoro-type polymer.

10. A method of forming a liquid crystal display device having a plurality of pixels, and a plurality of pixel electrodes (3) arranged in a matrix pattern, a switching element (10) for connecting each pixel electrode to one of a plurality of signal electrodes (1) for supplying a data signal, in accordance with a scanning signal supplied by one of a plurality of scanning electrodes (2), a counter electrode (5) and a liquid crystal layer (6) containing a liquid crystal material disposed between the pixel electrodes and the counter electrode, comprising the steps of:

forming the plurality of scanning, signal and pixel electrodes, and switching elements on a first substrate (4);

forming the counter electrodes on a second substrate (4'); and

sandwiching the liquid crystal layer between the first and second substrates, characterised by dispersing the liquid crystal material in or impregnating the liquid crystal material with a transparent fluoro-type polymer comprising one of polyperfluorooctyl methacrylate, polyperfluorooctylethyl acrylate, polytrifluoroethyl acrylate, poly-2,2,3,3-tetrafluoropropylacrylate, polyperfluorooctylacrylate, perfluorooctyl acrylate, perfluorooctylethyl acrylate-2-ethylhexyl acrylate copolymer, trifluoroethyl acrylate-2-ethylhexyl acrylate copolymer, 2,2,3,3-tetrafluoropropyl acrylate-2-ethylhexyl acrylate copolymer, perfluorooctylacrylate-2-ethylhexylacrylate copolymer, or any combination thereof.

11. A method as claimed in claim 10, wherein said step of sandwiching the liquid crystal layer (6) comprises the steps of filling a homogeneous mixture solution of said liquid crystal material and a polymerizable fluoro-type composition in the space between said first and second substrates (7,8), and then polymerizing and curing said polymerizable fluoro-type composition thereby dispersing said liquid crystal material in said transparent fluoro-type polymer.

12. A method as claimed in claim 10, wherein said step of sandwiching comprises forming previously a porous material composed of said transparent fluoro-type polymer between said first and second substrates (7,8), and then impregnating said liquid crystal material in said porous material.

13. A method as claimed in claim 10, wherein said step of sandwiching comprises mixing said fluoro-type polymer, said liquid crystal material and a solvent to form a solution, applying said solution to said first and/or second substrates (7, 8), and then evaporating said solvent off thereby dispersing said liquid crystal material in said fluoro-type polymer.

**Patentansprüche**

1. Flüssigkristall-Anzeigevorrichtung, umfassend eine Vielzahl von Pixeln und eine Vielzahl von in einem Matrixmuster angeordneten Pixelelektroden (3), ein entsprechendes Schaltelement (10) zum Verbinden jeder Pixelelektrode mit einer einer Vielzahl von Signalelektroden (1) zur Zuführung eines Datensignals zu dieser Pixelelektrode gemäß einem Abtastsignal, welches durch eine einer Vielzahl von Abtastelektroden (2) zugeführt wird, eine Gegenelektrode (5) und eine Flüssigkristallschicht (6), welche ein Flüssigkristallmaterial dispergiert in oder imprägniert mit einem Polymer vom Fluortyp enthält und zwischen den Pixelelektroden und der Gegenelektrode angeordnet ist, **dadurch gekennzeichnet**, daß das Polymer vom Fluortyp eines aus Polyperfluoroctylmethacrylat, Polyperfluoroctylethylacrylat, Polytrifluorethylacrylat, Poly-2,2,3,3-tetrafluorpropylacrylat, Polyperfluoroctylacrylat, Perfluoroctylethylacrylat-2-Ethylhexylacrylat-Copolymer, Trifluorethylacrylat-2-Ethylhexylacrylat-Copolymer, 2,2,3,3-Tetrafluorpropylacrylat-2-Ethylhexylacrylat-Copolymer, Perfluoroctylacrylat-2-Ethylhexylacrylat-Copolymer oder irgendeine Kombination davon umfaßt.

2. Flüssigkristall-Anzeigevorrichtung nach Anspruch 1, wobei das Polymer vom Fluortyp eines aus Polyperfluoroctylmethacrylat, Polyperfluoroctylethylacrylat, Polytrifluorethylacrylat, Poly-2,2,3,3-tetrafluorpropylacrylat, Polyperfluoroctylacrylat oder irgendeine Kombination davon umfaßt.

3. Flüssigkristall-Anzeigevorrichtung nach Anspruch 2, wobei das Polymer vom Fluortyp ein Homopolymer ist.

4. Flüssigkristall-Anzeigevorrichtung nach Anspruch 1 oder 2, wobei das Polymer vom Fluortyp ein Homopolymer aus einem fluorhaltigen Vinylmonomer oder ein Copolymer davon ist.

5. Flüssigkristall-Anzeigevorrichtung nach mindestens einem dervorangehenden Ansprüche, umfassend weiterhin
   ein erstes Substrat (4) mit den Signalelektroden (1) und den Abtastelektroden (2), welche durch eine Isolationsschicht voneinander isoliert sind, wobei das erste Substrat weiterhin mit den Schaltelementen versehen ist, welche jeweils einen Schalttransistor (10) umfassen, sowie den Pixelelektorden (2), beide in Verbindung mit Kreuzungsabschnitten der Signalelektroden und der Abtastelektroden; und
   ein zweites Substrat (4') mit der Gegenelektrode (5), welche zumindestens gegenüberliegend den Pixelelektroden anzuordnen ist,
   wobei das erste und zweite Substrat so einander gegenüberliegen, daß die Flüssigkristallschicht (6) dazwischen liegt, wobei das Flüssigkristallmaterial eine positive dielektrische Anisotropie aufweist und das Polymer vom Fluortyp transparent ist.

6. Flüssigkristall-Anzeigevorrichtung nach Anspruch 5, wobei die Flüssigkristallschicht (6) 150-900 Gew.Teile des Flüssigkristallmaterials, dispergiert oder imprägniert in 100 Gew.-Teilen des transparenten Polymer vom Fluortyp, enthält.

7. Flüssigkristall-Anzeigevorrichtung nach Anspruch 5 oder 6, wobei die Flüssigkristallschicht (6) durch Einfüllen einer homogenen Mischungslösung aus dem Füssigkristallmaterial und einer polymerisierbaren Zusammensetzung vom Fluortyp in den Raum zwischen dem ersten und zweiten Substrat (7, 8) und dann Polymerisieren und Härten der Zusammensetzung vom Fluortyp gebildet wird, wodurch das Flüssigkristallmaterial in dem transparenten Polymer vom Fluortyp dispergiert wird.

8. Flüssigkristall-Anzeigevorrichtung nach Anspruch 5 oder 6, wobei die Flüssigkristallschicht (6) durch vorausgehendes Bilden eines aus dem transparenten Polymer vom Fluortyp zusammengesetzten, porösen Materials zwischen dem ersten und zweiten Substrat (7, 8) und dann Imprägnieren des Flüssigkristallmaterials in das poröse Material gebildet wird.

9. Flüssigkristall-Anzeigevorrichtung nach Anspruch 5 oder 6, wobei die Flüssigkristallschicht (6) durch Vermischen des Polymeren vom Fluortyp, des Flüssigkristallmaterials und eines Lösungsmittels zur Bildung einer Lösung, Auftragen der Lösung auf das erste und/oder zweite Substrat und dann Verdampfen des Lösungsmittels gebildet wird, wodurch das Flüssigkristallmaterial in dem Polymer vom Fluortyp dispergiert wird.

**10.** Verfahren zur Bildung einer Flüssigkristall-Anzeigevorrichtung mit einer Vielzahl von Pixeln und einer in einem Matrixmuster angeordneten Vielzahl von Pixelelektroden (3), einem Schaltelement (10) zum Verbinden jeder Pixelelektrode mit einer einer Vielzahl von Signalelektroden (1) zur Zuführung eines Datensignals gemäß einem Abtastsignal, welches durch eine einer Vielzahl von Abtastelektroden (2) zugeführt wird, einer Gegenelektrode (5) und einer ein Flüssigkristallmaterial enthaltenden Flüssigkristallschicht (6), welche zwischen den Pixelelektroden und der Gegenelektrode angeordnet ist, umfassend die Schritte:

Bilden einer Vielzahl von Abtast-, Signal- und Pixelelektroden sowie Schaltelementen auf einem ersten Substrat (4);

Bilden von Gegenelektroden auf einem zweiten Substrat (4') und

Einfügen der Flüssigkristallschicht zwischen dem ersten und zweiten Substrat, **gekennzeichnet durch** das Dispergieren des Flüssigkristallmaterials in oder Imprägnieren des Flüssigkristallmaterials mit einem transparenten Polymer vom Fluortyp, umfassend eines aus Polyperfluoroctylmethacrylat, Polyperfluoroctylethylacrylat, Polytrifluorethylacrylat, Poly-2,2,3,3-tetrafluorpropylacrylat, Polyperfluoroctylacrylat, Perfluoroctylethylacrylat-2-Ethylhexxylacrylat-Copolymer, Trifluorethylacrylat-2-Ethylhexylacrylat-Copolymer, 2,2,3,3-Tetrafluorpropylacrylat-2-Ethylhexylacrylat-Copolymer, Perfluoroctylacrylat-2-Ethylhexylacrylat-Copolymer oder irgendeine Kombination davon.

**11.** Verfahren nach Anspruch 10, wobei der Schritt des Einfügens der Flüssigkristallschicht (6) die Schritte des Einfüllens einer homogenen Mischungslösung aus dem Flüssigkristallmaterial und einer polymerisierbaren Zusammensetzung vom Fluortyp in den Raum zwischen dem ersten und zweiten Substrat (7, 8) und dann Polymerisieren und Härten der polymerisierbaren Zusammensetzung vom Fluortyp umfaßt, wodurch das Flüssigkristallmaterial in dem transparenten Polymer vom Fluortyp dispergiert wird.

**12.** Verfahren nach Anspruch 10, wobei der Schritt des Einfügens die vorausgehende Bildung eines porösen, aus dem transparenten Polymer vom Fluortyp zusammengesetzten Materials zwischen dem ersten und zweiten Substrat (7, 8) und dann Imprägnieren des Flüssigkristallmaterials in das poröse Material umfaßt.

**13.** Verfahren nach Anspruch 10, wobei der Schritt des Einfügens das Vermischen des Polymeren vom Fluortyp, des Flüssigkristallmaterials und eines Lösungsmittels zur Bildung einer Lösung, Auftragen der Lösung auf das erste und/oder zweite Substrat (7, 8) und dann Verdampfen des Lösungsmittels umfaßt, wodurch das Flüssigkristallmaterial in dem Polymer vom Fluortyp dispergiert wird.

**Revendications**

**1.** Dispositif d'affichage à cristaux liquides comprenant une multiplicité de pixels, et une multiplicité d'électrodes de pixel (3) disposées suivant la configuration d'une matrice, un élément de commutation respectif (10) pour relier chaque électrode de pixel à une électrode parmi une multiplicité d'électrodes de signal (1) pour fournir un signal de données à cette électrode de pixel en fonction d'un signal de balayage fourni par une électrode parmi une multiplicité d'électrodes de balayage (2), une contreélectrode (5) et une couche de cristaux liquides (6) contenant des cristaux liquides dispersés dans un polymère de type fluoré, ou imprégnés par ce dernier, et disposée entre les électrodes de pixel et la contre-électrode, caractérisé en ce que le polymère de type fluoré comprend l'un des polymères suivants: poly (méthacrylate de perfluorooctyle), poly (acrylate de perfluorooctyléthyle), poly (acrylate de trifluoroéthyle), poly (acrylate de 2,2,3,3-tétrafluoropropyle), poly (acrylate de perfluorooctyle), copolymère d'acrylate de perfluorooctyléthyle-acrylate de 2-éthylhexyle, copolymère d'acrylate de trifluoroéthyleacrylate de 2-éthylhexyle, copolymère d'acrylate de 2,2,3,3-tétrafluoropropyle-acrylate de 2-éthylhexyle, copolymère d'acrylate de perfluorooctyle-acrylate de 2-éthylhexyle, ou toute combinaison de ceux-ci.

**2.** Dispositif d'affichage à cristaux liquides selon la revendication 1, dans lequel le polymère de type fluoré comprend l'un des polymères suivants: poly (méthacrylate de perfluorooctyle), poly (acrylate de perfluorooctyléthyle), poly (acrylate de trifluoroéthyle), poly (acrylate de 2,2,3,3-tétrafluoropropyle), poly (acrylate de perfluorooctyle), ou toute combinaison de ceux-ci.

**3.** Dispositif d'affichage à cristaux liquides selon la revendication 2, dans lequel le polymère de type fluoré est un homopolymère.

4. Dispositif d'affichage à cristaux liquides selon la revendication 1 ou la revendication 2, dans lequel ledit polymère de type fluoré est un homopolymère d'un monomère vinylique contenant du fluor ou un copolymère de celui-ci.

5. Dispositif d'affichage à cristaux liquides selon l'une quelconque des revendications précédentes, comprenant, en outre:

un premier substrat (4) comportant lesdites électrodes de signal (1) et lesdites électrodes de balayage (2) isolées les unes des autres par l'intermédiaire d'une couche isolante, ledit premier substrat comportant, en outre, lesdits éléments de commutation, se composant chacun d'un transistor de commutation (10), et lesdites électrodes de pixel (3), les uns et les autres étant associés aux intersections desdites électrodes de signal et desdites électrodes de balayage; et

un second substrat (4') comportant ladite contreélectrode (5) devant être placée au moins en regard desdites électrodes de pixel,

lesdits premier et second substrats étant en regard l'un de l'autre de façon à prendre en sandwich ladite couche de cristaux liquides (6), lesdits cristaux liquides ayant une anisotropie diélectrique positive et ledit polymère de type fluoré étant transparent.

6. Dispositif d'affichage à cristaux liquides selon la revendication 5, dans lequel ladite couche de cristaux liquides (6) contient 150 à 900 parties en poids desdits cristaux liquides dispersés ou imprégnés dans 100 parties en poids dudit polymère transparent de type fluoré.

7. Dispositif d'affichage à cristaux liquides selon la revendication 5 ou la revendication 6, dans lequel ladite couche de cristaux liquides (6) est formée en introduisant une solution formant mélange homogène desdits cristaux liquides et d'une composition polymérisable de type fluoré dans l'espace situé entre lesdits premier et second substrats (7, 8), puis en polymérisant et durcissant ladite composition polymérisable de type fluoré afin de disperser lesdits cristaux liquides dans ledit polymère transparent de type fluoré.

8. Dispositif à cristaux liquides selon la revendication 5 ou la revendication 6, dans lequel ladite couche de cristaux liquides (6) est réalisée en formant au préalable une matière poreuse se composant dudit polymère transparent de type fluoré entre lesdits premier et second substrats (7, 8), et en imprégnant ensuite lesdits cristaux liquides dans ladite matière poreuse.

9. Dispositif à cristaux liquides selon la revendication 5 ou la revendication 6, dans lequel ladite couche de cristaux liquides (6) est formée en mélangeant ledit polymère de type fluoré, lesdits cristaux liquides et un solvant afin de former une solution, en appliquant ladite solution sur lesdits premier et/ou second substrats, et en éliminant ensuite ledit solvant par évaporation afin de disperser lesdits cristaux liquides dans ledit polymère de type fluoré.

10. Procédé de formation d'un dispositif d'affichage à cristaux liquides comportant une multiplicité de pixels, et une multiplicité d'électrodes de pixel (3) disposées suivant une configuration de matrice, un élément de commutation (10) pour relier chaque électrode de pixel à une électrode parmi une multiplicité d'électrodes de signal (1) pour fournir un signal de données, en fonction d'un signal de balayage fourni par une électrode parmi une multiplicité d'électrodes de balayage (2), une contre-électrode (5) et une couche de cristaux liquides (6) contenant des cristaux liquides disposée entre les électrodes de pixel et la contreélectrode, comprenant les étapes consistant à:

former la multiplicité d'électrodes de balayage, de signal et de pixel, ainsi que les éléments de commutation sur un premier substrat (4);

former les contre-électrodes sur un second substrat (4'); et

prendre en sandwich la couche de cristaux liquides entre les premier et second substrats, caractérisé par le fait que l'on disperse les cristaux liquides dans un polymère transparent de type fluoré, ou que l'on imprègne ces cristaux avec ce polymère, ledit polymère comprenant l'un des composés suivants: poly (méthacrylate de perfluorooctyle), poly (acrylate de perfluorooctyléthyle), poly (acrylate de trifluoroéthyle), poly (acrylate de 2,2,3,3-tétrafluoropropyle), poly (acrylate de perfluorooctyle), acrylate de perfluorooctyle, copolymère d'acrylate de perfluorooctyléthyle-acrylate de 2-éthylhexyle, copolymère d'acrylate de trifluoroéthyle-acrylate de 2-éthylhexyle, copolymère d'acrylate de 2,2,3,3-tétrafluoropropyle-acrylate de 2-éthylhexyle, copolymère d'acrylate de perfluorooctyleacrylate de 2-éthylhexyle, ou toute combinaison de ces composés.

**11.** Procédé selon la revendication 10, dans lequel ladite étape consistant à prendre en sandwich la couche de cristaux liquides (6) comprend les étapes consistant à introduire une solution de mélange homogène desdits cristaux liquides et d'une composition polymérisable de type fluoré dans l'espace situé entre lesdits premier et second substrats (7, 8), puis à polymériser et durcir ladite composition polymérisable de type fluoré, afin de disperser lesdits cristaux liquides dans ledit polymère transparent de type fluoré.

**12.** Procédé selon la revendication 10, dans lequel ladite étape de prise en sandwich comprend la formation préalable d'une matière poreuse se composant dudit polymère transparent de type fluoré entre lesdits premier et second substrats (7, 8), et, ensuite, l'imprégnation desdits cristaux liquides dans ladite matière poreuse.

**13.** Procédé selon la revendication 10, dans lequel ladite étape de prise en sandwich comprend le mélange dudit polymère de type fluoré, desdits cristaux liquides et d'un solvant pour former une solution, l'application de ladite solution sur lesdits premier et/ou second substrats (7,8), puis l'élimination par évaporation dudit solvant afin de disperser lesdits cristaux liquides dans ledit polymère de type fluoré.

FIG.1(a)  FIG.1(b)

FIG.2

# F I G . 3

FIG.4

FIG.5(a)

$V_S$  0

FIG.5(b)

$V_G$

FIG.5(c)

$V_D$  0

FIG. 6

FIG.7(a)

$V_S$   0

FIG.7(b)

$V_G$

FIG.7(c)

$V_D$   0